# EUROPEAN PATENT APPLICATION

(11) **EP 4 235 941 A1**
(43) Date of publication of application: **30.08.2023**
(21) Application number: 23156316.4
(22) Date of filing: 13.02.2023
(51) Int. Cl.: H01M 50/503, H01M 50/55, H01M 50/583

(54) **BATTERY CONNECTION MODULE**

(30) Priority: 25.02.2022 CN 202210176845; 06.01.2023 CN 202310021961
(71) Applicant: Molex, LLC, Lisle, IL 60532 (US)
(72) Inventor: ANG, Lay Khim, Jurong Town (SG); GOH, Siow Pheng, Jurong Town (SG)
(74) Representative: Ter Meer Steinmeister & Partner

(57) **Abstract**

A battery connection module is provided, the battery connection module includes a tray and a plurality of connecting busbars; the plurality of connecting busbars are assembled on the tray; each connecting busbar has a plurality of components, each of a part of the plurality of components having a main body portion, a positive electrode connecting portion which extends from a first end of the main body portion and a negative electrode connecting portion which extends from a second end of the main body portion, each of a part of the plurality of components has a main body portion and only has a positive electrode connecting portion which extends from a first end of the main body portion, each of a part of the plurality of components has a main body portion and only has a negative electrode connecting portion which extends from a second end of the main body portion; the main body portions of the plurality of components of each connecting busbar are integrally connected by respective connection portions; in each the connecting busbar, each of a part of the plurality of components connects the positive electrodes and the negative electrodes of the two battery cells of every other column, each of a part of the plurality of components connects the positive electrodes and the negative electrodes of the two battery cells of the same row, each of a part of the plurality of components only connects the positive electrode of one the battery cell, each of a part of the plurality of components only connects the negative electrode of one the battery cell.

## Description

The present application claims a priority of Chinese Patent Application No. CN202210176845.0 filed February 25, 2025, titled "battery connection module.

### TECHNICAL FIELD

The present disclosure relates to the field of battery technology, and particularly relates to a battery connection module.

### BACKGROUND

China Taiwanese patent No.TWI308406B (corresponding United States patent No.US7,811,701B2) discloses a battery pack, electrical conduction pieces of the battery pack each are constructed so that a plurality of pairs of tab connecting point each are symmetric and extend from a left side and a right side of a piece body, each electrical conduction piece is used to connect adjacent two columns of batteries, the tab connecting points of the electrical conduction piece are constructed to be symmetrically and regularly arranged, the batteries are also symmetrically and regularly arranged.

However, when it needs to use one electrical conduction piece to connect more number of batteries than the number of batteries of the above adjacent two columns, the construction of the electrical conduction piece disclosed by the above patent document cannot meet this need. For example, one column has three batteries, two columns has six batteries, based on the construction of the electrical conduction piece disclosed by the above patent document, the tab connecting points of the electrical conduction piece are constructed to be symmetrically and regularly arranged, one electrical conduction piece only can connect six batteries of the two adjacent columns, when it needs to use one electrical conduction piece to connect for example ten batteries at the same time under the same battery arrangement as the above, at this time ten batteries to be connected will not be positioned at regular and symmetric positions, the construction disclosed by the above patent document cannot meet this need.

### SUMMARY

One main object of the present disclosure is to provide a battery connection module in which a single connecting busbar can connect more number of battery cells and can connect a plurality of battery cells irregularly arranged so as to overcome at least one deficiency of the above prior art.

The object is solved by the features of the independent claims Preferred embodiments are given in the dependent claims.

In order to realize the above object, the present disclosure employs the following technical solution: according to one aspect of the present disclosure, a battery connection module is provided, the battery connection module is used to connect a battery cell array, the battery cell array comprises a plurality of columns and each column comprises battery cells and is the same in the number of battery cells, the corresponding battery cell of one column of adjacent columns is positioned between the two corresponding battery cells of the other column of the adjacent columns, the plurality of columns repeat arrangement of the adjacent columns in a row direction and constitute a plurality of rows of the battery cells, the corresponding battery cell of one row of adjacent rows is positioned between the two corresponding battery cells of the other row of the adjacent rows, each battery cell has a positive electrode and a negative electrode which are positioned on the same end face, the battery connection module comprises a tray and a plurality of connecting busbars; the plurality of connecting busbars are assembled on the tray; each connecting busbar has a plurality of components, each of a part of the plurality of components having a main body portion, a positive electrode connecting portion which extends from a first end of the main body portion and a negative electrode connecting portion which extends from a second end of the main body portion, each of a part of the plurality of components has a main body portion and only has a positive electrode connecting portion which extends from a first end of the main body portion, each of a part of the plurality of components has a main body portion and only has a negative electrode connecting portion which extends from a second end of the main body portion; the main body portions of the plurality of components of each connecting busbar are integrally connected by respective connection portions; in each the connecting busbar, each of a part of the plurality of components connects the positive electrodes and the negative electrodes of the two battery cells of every other column, each of a part of the plurality of components connects the positive electrodes and the negative electrodes of the two battery cells of the same row, each of a part of the plurality of components only connects the positive electrode of one the battery cell, each of a part of the plurality of components only connects the negative electrode of one the battery cell.

According to one or more embodiments, the main body portion may be a plane structure and/or may extend linearly.

In one or more embodiments, a thickness of the positive electrode connecting portion may be less than a thickness of the main body portion.

In one or more embodiments, a lower surface of the positive electrode connecting portion may be coplanar with a lower surface of the main body portion.

In one or more embodiments, the negative electrode connecting portion of each component of the connecting busbar may have two branching feet.

In one or more embodiments, the main body portion of each component of the connecting busbar may be provided with a fusible portion which acts as overcurrent protection.

In one or more embodiments, a cross sectional area of the fusible portion in a thickness direction may be minimum relative to a cross sectional area of other part of the main body portion.

In one or more embodiments, the main body portion may be provided with a material removed portion.

In one or more embodiments, the fusible portion may be constructed by the material removed portion.

In one or more embodiments, the fusible portion may be provided to the main body portion close to the negative electrode connecting portion.

In one or more embodiments, the material removed portion may be an aperture constructed on the main body portion.

In one or more embodiments, two edge strips which are at two opposite sides of the aperture may together constitute the fusible portion.

In one or more embodiments, the two edge strips may be constructed as V-shapes which protrude toward each other and toward an interior of the aperture.

In one or more embodiments" the tray may be integrally provided with an assembling post.

In one or more embodiments, the connecting busbar may be provided with an assembling hole which corresponds to the assembling post.

In one or more embodiments, each column of the battery cell array may have Y battery cells and/or may be the same in the number of battery cells.

In one or more embodiments, each connecting busbar may comprise X positive electrode connecting portions and X negative electrode connecting portions.

In one or more embodiments, X may be larger than Y.

In one or more embodiments, the plurality of connecting busbars may be divided to a plurality of groups which repeatedly arrange one of the plurality of groups.

In one or more embodiments, each group may comprise at least two connecting busbars.

In one or more embodiments, the connecting busbars of the same group may be not completely the same in structure feature.

In one or more embodiments, each column of the battery cell array may comprise three battery cells.

In one or more embodiments, six rows of the battery cells may be constituted in the battery cell array.

In one or more embodiments, each connecting busbar may have six components, five positive electrode connecting portions and five negative electrode connecting portions.

In one or more embodiments, the plurality of connecting busbars may be arranged to repeat a group that six connecting busbars having different structure features may be continuously arranged so that a plurality of groups may be formed to connect the battery cells.

In one or more embodiments, each connecting busbar may span the battery cells of four columns.

In one or more embodiments, the fusible portion may be provided between the main body portion and the positive electrode connecting portion.

In one or more embodiments, there may be at least one connecting strip between the main body portion and the positive electrode connecting portion.

In one or more embodiments, the connecting strip may constitute the fusible portion.

In one or more embodiments, the connecting strip may be constructed as an arch which protrudes.

In one or more embodiments, the two adjacent trays may be connected by a connecting construction.

In one or more embodiments, the connecting construction may include a latching piece which may be provided to one of the two adjacent trays.

In one or more embodiments, a latching block may be provided to the other of the two adjacent trays.

In one or more embodiments, the latching piece may be constructed as a pair of latching legs.

In one or more embodiments, tips of two latching legs may have latching hooks which face each other.

In one or more embodiments, the latching block may be constituted as a T-shaped protruding block.

In one or more embodiments, each component, which has the negative electrode connecting portion, of the plurality of components of the connecting busbar may make the negative electrode connecting portion constituted as an arc-shaped sheet body which may spread toward two sides.

In one or more embodiments, there may be a step portion which may be between the main body portion and the negative electrode connecting portion and bends downwardly.

As can be seen from the above technical solutions, advantages and positive effects of the battery connection module proposed by the present disclosure lie in that: the battery connection module proposed by the present disclosure can be adapted to the battery cell array in which the battery cells are irregularly arranged, each battery cell of the battery cell array has the positive electrode and the negative electrode which are in the same end face, the battery cells of every two adjacent columns are staggered in the corresponding rows so that the battery cells forms a regular symmetric arrangement, in such a type of the battery cell array, by the battery connection module promoted by the present disclosure, it can use one connecting busbar to realize connection with more number of the battery cells, can connect the battery cells which are not positioned in regular symmetric positions, at the same time can use a plurality of connecting busbars which each has a different irregular symmetric configuration to connect the battery cells.

### BRIEF DESCRIPTION OF THE DRAWINGS

Various purpose, features and advantages of the present disclosure will be apparent from considering the detailed description of preferred embodiments of the present disclosure in combination with the drawings The drawings are only exemplary illustrations of the present disclosure and are not necessarily drawn to scale. In the drawings, the same reference numeral always indicates the same or similar element. In the drawings:
FIG. 1 is a perspective structural schematic view of a battery pack;
FIG. 2 is an exploded schematic view of a partial structure of FIG. 1;
FIG. 3 is an exploded schematic view of another partial structure of FIG. 1;
FIG. 4 is a top view of FIG. 1;
FIG. 5 is a perspective structural schematic view of a right side part of one battery set of battery pack of FIG. 1;
FIG. 6 is an exploded schematic view of FIG. 5;
FIG. 7 is a perspective view of one connecting busbar of a battery connection module of FIG. 1;
FIG. 8 is a top view of the right side part of the one battery set of the battery pack of FIG. 1 with a tray omitted;
FIG. 9 is a top view of a left side part of the one battery set of the battery pack of FIG. 1 with a tray omitted;
FIG. 10 is a perspective view of a partial structure of the battery connection module with a partial structure of trays and connecting busbars of the battery connection module shown;
FIG. 11 is an exploded schematic view of FIG. 10;
FIG. 12 is a partially enlarged schematic view of FIG. 11 indicated by a dotted-line frame P;
FIG. 13 is a partially enlarged schematic view of FIG. 11 indicated by a dotted-line frame Q;
FIG. 14 is a plane schematic view of the connecting busbars of the battery connection module of
FIG. 10 and FIG. 11;

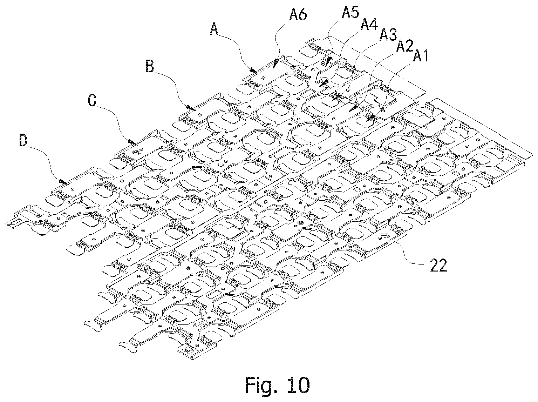

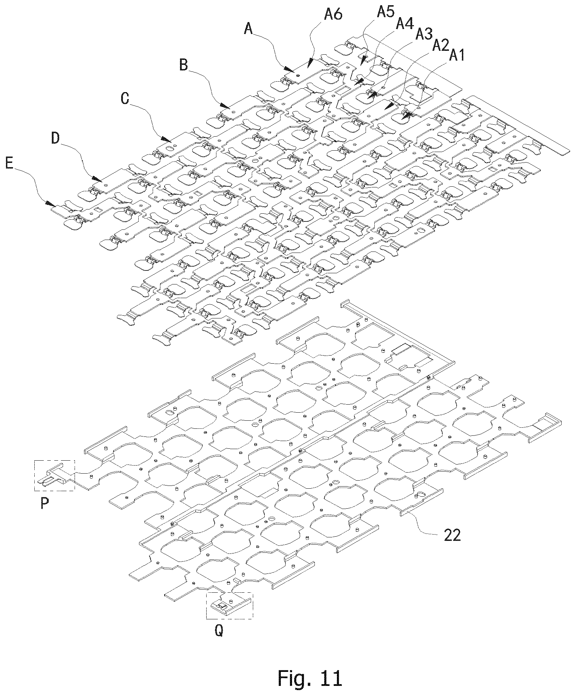

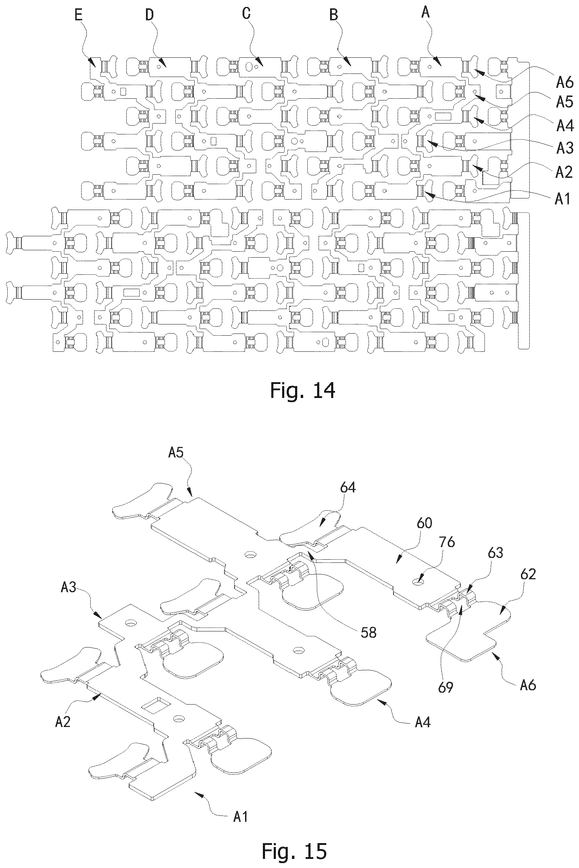

FIG. 15 is a perspective view of one connecting busbar of the battery connection module of FIG. 10 and FIG. 11.

### DETAILED DESCRIPTION

Typical embodiments embodying the features and advantages of the present disclosure will be described in detail in the following description. It should be understood that the present disclosure can have various changes in different embodiments, which are not departed from the scope of the present disclosure, and the descriptions and drawings thereof are for illustrative purposes in essence and are not for limiting the present disclosure.

In the following description of different exemplary embodiments of the present disclosure, reference is made to the accompanying drawings, which form a part of the present disclosure, and in which different exemplary structures, systems, and steps of aspects that may implement the present disclosure are shown by way of example. It should be understood that other specific solutions of components, structures, exemplary devices, systems, and steps may be used, and structural and functional modifications may be made without departing from the scope of the present disclosure. Moreover, although the terms "above", "between", "within", and the like may be used in this specification to describe different exemplary features and elements of the present disclosure, these terms are used herein for convenience only, for example, according to the direction of the examples illustrated in the accompanying drawings. Any content of the present specification should not be understood the structure falls within the scope of the present disclosure is required to be positioned in a specific three-dimensional direction.

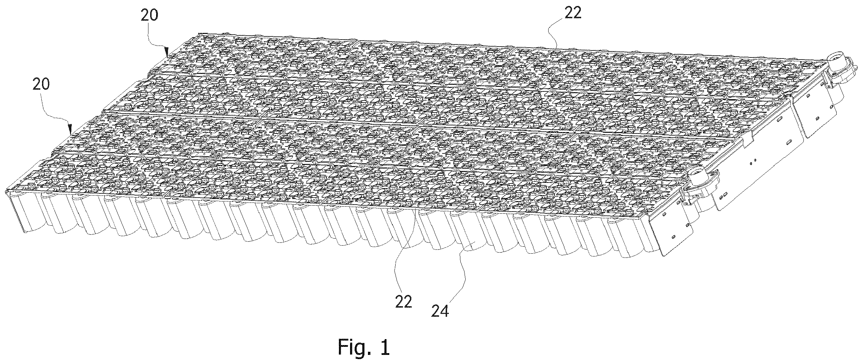

Referring to FIG. 1, FIG. 1 representatively illustrates an exploded schematic view of a battery pack, the battery pack includes four battery sets, each battery sets includes a battery connection module 20 proposed by the present disclosure and a battery cell array (AR1-AR4). A person skilled in the art easily understands that, in order to apply relevant design of the present disclosure to other types of energy storing devices, various modifications, additions, substitutions, deletions or other variations may be made to following specific embodiments, but these modifications, additions, substitutions, deletions or other variations are still fallen within a scope of a principle of the battery connection module 20 proposed by the present disclosure.

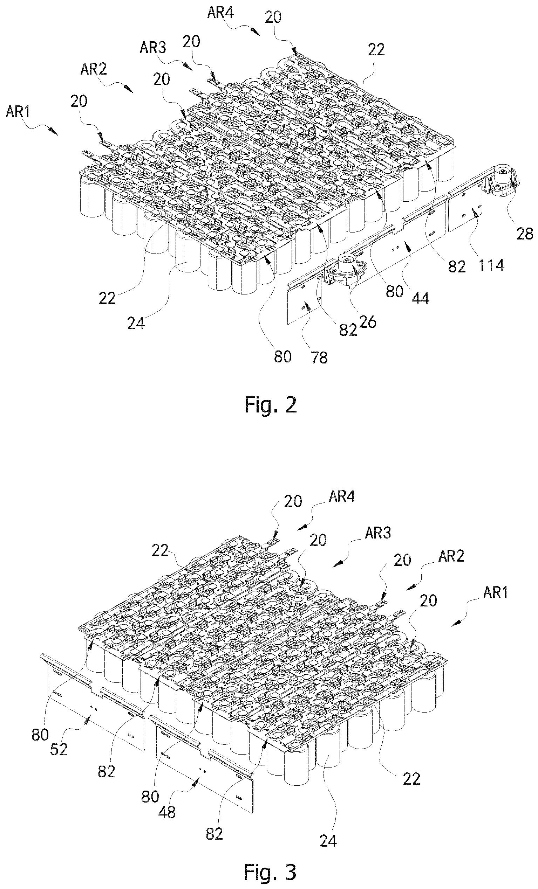

As shown in FIG. 2 to FIG. 4, in an embodiment of the present disclosure, two ends of each battery connection module 20 respectively have a first end portion busbar 80 and a second end portion busbar 82, each component of the first end portion busbar 80 respectively connects negative electrodes of battery cells 24 of one end of the two ends of the corresponding battery cell array of the battery connection module 20, each component of the second end portion busbar 82 respectively connects positive electrodes of battery cells 24 of the other end of the two ends of the battery cell array. On this basis, four battery connection modules 20 may be alternately arranged and be reversed relative to each other. Specifically, FIG. 2 illustrates a partial structure of a right end of FIG. 1, taking a sequence from lower left to upper right in FIG. 2, the first end portion busbar 80 of the first battery connection module 20 is connected to the negative electrodes of the battery cells 24 of a right end of the battery cell array AR1, the second battery connection module 20 is left and right reversed relative to the first battery connection module 20, that is, the second end portion busbar 82 of the second battery connection module 20 is connected to the positive electrodes of the battery cells 24 of a right end of the battery cell array AR2, the third battery connection module 20 is reversed relative to the second battery connection module 20 in a manner similar to the above, and the fourth battery connection module 20 is reversed relative to the third battery connection module 20 in a manner similar to the above. Correspondingly, FIG. 3 illustrates a partial structure of a left end of FIG. 1, taking a sequence from lower right to upper left in FIG. 3, the second end portion busbar 82 of the first battery connection module 20 is connected to the positive electrodes of the battery cells 24 of a left end of the battery cell array AR1, the first end portion busbar 80 of the second battery connection module 20 is connected to the negative electrodes of the battery cells 24 of a left end of the battery cell array AR2, the second end portion busbar 82 of the third battery connection module 20 is connected to the positive electrodes of the battery cells 24 of a left end of the battery cell array AR3, the first end portion busbar 80 of the fourth battery connection module 20 is connected to the negative electrodes of the battery cells 24 of a left end of the battery cell array AR4.

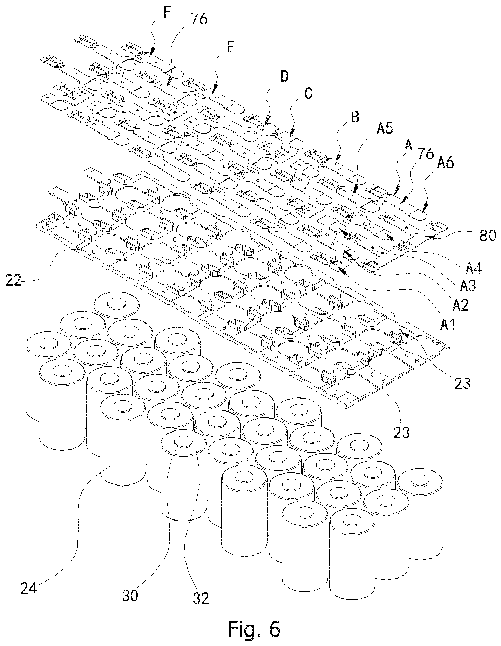

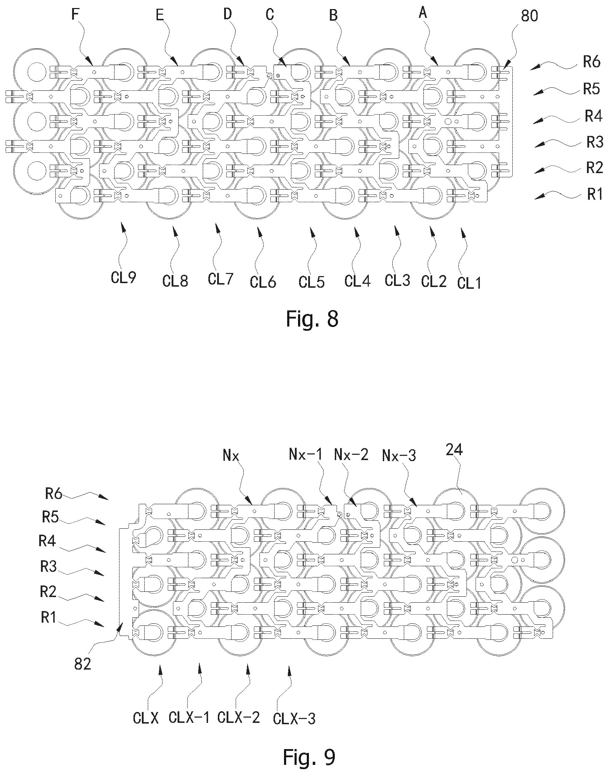

As shown in FIG. 2 and FIG. 3, in an embodiment of the present disclosure, the battery pack further includes an inputting busbar 78, an outputting busbar 114, a first bridging busbar 44, a second bridging busbar 48 and a third bridging busbar 52. Specifically, the inputting busbar 78 is connected to the first end portion busbar 80 of the battery connection module 20 which corresponds to the battery cell array AR1, and the inputting busbar 78 is provided with a first power connector 26 (that is, a negative electrode end), the outputting busbar 114 is connected to the second end portion busbar 82 of the battery connection module 20 which corresponds to the battery cell array AR4, and the outputting busbar 114 is provided with a second power connector 28 (that is, a positive electrode end), the first bridging busbar 44 is connected to the second end portion busbar 82 of the battery connection module 20 which corresponds to the battery cell array AR2 and the first end portion busbar 80 of the battery connection module 20 which corresponds to the battery cell array AR3, the second bridging busbar 48 is connected to the second end portion busbar 82 of the battery connection module 20 which corresponds to the battery cell array AR1 and the first end portion busbar 80 of the battery connection module 20 which corresponds to the battery cell array AR2, the third bridging busbar 52 is connected to the second end portion busbar 82 of the battery connection module 20 which corresponds to the battery cell array AR3 and the first end portion busbar 80 of the battery connection module 20 which corresponds to the battery cell array AR4. As shown in FIG. 6 to FIG. 8, in the present embodiment, the battery connection module 20 proposed by the present disclosure is used to connect the battery cell array, the battery cells 24 are arranged side by side in columns (CL1-CLX) and rows (R1-RX), the battery cells 24 of every two adjacent columns are offset and staggered relative to each other, and the battery cells 24 of every two adjacent rows are offset and staggered relative to each other. In other words, the corresponding battery cell 24 of one column of the two adjacent columns is positioned between the corresponding two battery cells 24 of the other column of the two adjacent columns, and the corresponding battery cell 24 of one row of the two adjacent rows is positioned between the two battery cells 24 of the other row of the two adjacent rows. Each battery cell 24 has the positive electrode and the negative electrode which are in the same end face, for example, a positive electrode terminal 30 and a negative electrode terminal 32 as shown in FIG. 6. The battery connection module 20 includes a tray 22 and a plurality of connecting busbars A.

Hereinafter in combination with these figures, each main constituent part of the battery connection module 20 proposed by the present disclosure will be described in detail in structure, connecting manner and function relationship.

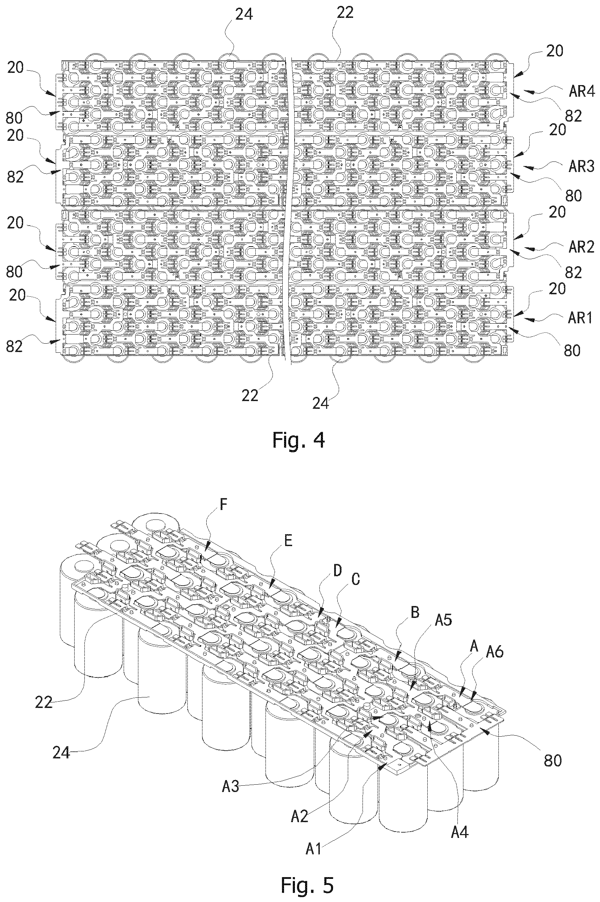

As shown in FIG. 5 to FIG. 7, in an embodiment of the present disclosure, the plurality of connecting busbars A are assembled on the tray 22. Each connecting busbar A has a plurality of components (A1-A6). Each of a part (A2, A4-A6) of the plurality of components has a main body portion 60, a positive electrode connecting portion 62 which extends from a first end of the main body portion 60 and a negative electrode connecting portion 64 which extends from a second end of the main body portion 60. The positive electrode connecting portion 62 is connected to the positive electrode of one corresponding battery cell 24, the negative electrode connecting portion 64 is connected to the negative electrode of one corresponding battery cell 24. Each of a part (A3) of the plurality of components has a main body portion 60 and only has a positive electrode connecting portion 62 which extends from a first end of the main body portion 60. Each of a part (A1) of the plurality of components has a main body portion 60 and only has a negative electrode connecting portion 64 which extends from a second end of the main body portion 60. The main body portions 60 of the plurality of components (A1-A6) of the connecting busbar A are correspondingly connected therebetween via respective connection portions 58. On this basis, in each connecting busbar A, at least one component connects the positive electrode and the negative electrode of the two battery cells 24 of every other column, at least one component connects the positive electrode and the negative electrode of the two battery cells 24 of the same row, at least one component only connects the positive electrode of one battery cell 24, at least one component only connects the negative electrode of one battery cell 24.

With the above design, the battery connection module 20 proposed by the present disclosure can be adapted to the battery cell array in which the battery cells 24 are irregularly arranged, each battery cell 24 of the battery cell array has the positive electrode and the negative electrode which are in the same end face, the battery cells 24 of every two adjacent columns are staggered in the corresponding rows so that the battery cells 24 forms a regular symmetric arrangement, in such a type of the battery cell array, by the battery connection module 20 promoted by the present disclosure, it can use one connecting busbar A to realize connection with more number of the battery cells 24, can connect the battery cells 24 which are not positioned in regular symmetric positions, at the same time can use a plurality of connecting busbars A which each has a different irregular symmetric configuration to connect the battery cells 24.

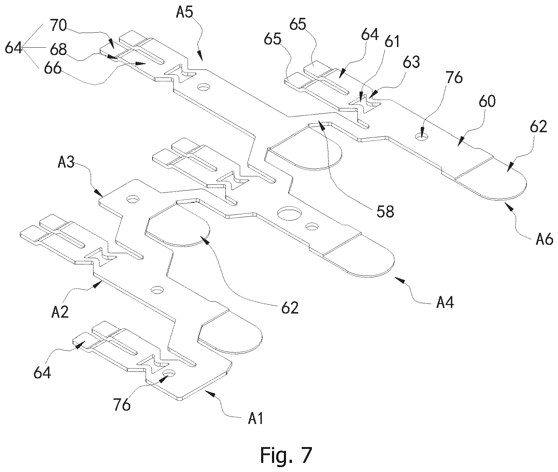

As shown in FIG. 7, in an embodiment of the present disclosure, the main body portion 60 is a plane structure and extends linearly. On this basis, a thickness of the positive electrode connecting portion 62 is less than a thickness of the main body portion 60, a lower surface of the positive electrode connecting portion 62 is coplanar with a lower surface of the main body portion 60.

As shown in FIG. 7, in an embodiment of the present disclosure, a middle of the negative electrode connecting portion 64 of each of the part (A1-A2, A4-A6) of the plurality of components the connecting busbar is provided with a slit to form two branching feet 65, the two branching feet 65 also may be a splayed construction, or the negative electrode connecting portion 64 also may form three or more branching feet 65.

As shown in FIG. 7, in an embodiment of the present disclosure, the negative electrode connecting portion 64 has a first part 66, a second part 68 and a third part 70. Specifically, the first part 66 extends from the main body portion 60 and is coplanar with the main body portion 60, the second part 68 extends downwardly and obliquely from the first part 66 by an angle, the third part 70 extends from second part 68 by an angle and is parallel to the first part 66, the third part 70 is used to connect the negative electrode of the corresponding battery cell 24.

As shown in FIG. 7, in an embodiment of the present disclosure, the main body portion 60 of each component (A1-A6) of the connecting busbar A is provided with a fusible portion 63 which acts as overcurrent protection, a cross sectional area of the fusible portion 63 in a thickness direction is minimum relative to a cross sectional area of the other part of the main body portion 60, so that the fusible portion 63 has high resistance, can generate large heat and can be melted and interrupted under overcurrent.

As shown in FIG. 7, based on the design that the main body portion 60 is provided with the fusible portion 63, in an embodiment of the present disclosure, the main body portion 60 is provided with a material removed portion 61 close to the positive electrode connecting portion 62 and the fusible portion 63 is constructed by the material removed portion 61. In some embodiments, the material removed portion 61 may be a groove, a through hole and the like, in addition, the material removed portion 61 also may be provided with at least two different types of thinning structures so as to construct the fusible portion 63 on the main body portion 60, for example, the through hole and the groove and the like are provided at the same time. In the present embodiment, the fusible portion 63 provided at a position of the main body portion 60 close to the negative electrode connecting portion 64 is taken as an example for description, in some embodiments, the fusible portion 63 also may be provided at a position of the main body portion 60 close to the positive electrode connecting portion 62, or is provided at other position of the main body portion 60, and the present disclosure is not limited thereto.

As shown in FIG. 7, based on the design that the fusible portion 63 is constructed by the material removed portion 61 of the main body portion 60, in an embodiment of the present disclosure, the material removed portion 61 may be an aperture constructed on the main body portion 60, and two edge strips which are at two opposite sides of the aperture together constitute the fusible portion 63, the two edge strips are constructed as V-shapes which protrude toward each other and toward an interior of the aperture.

As shown in FIG. 6, in an embodiment of the present disclosure, the tray 22 is integrally provided with an assembling post 23, the connecting busbar A is provided with an assembling hole 76 which corresponds to the assembling post 23. On this basis, the connecting busbar A and the tray 22 are assembled by means of the assembling post 23 and the assembling hole 76 which cooperate with each other.

Based on the design that the tray 22 is integrally provided with the assembling post 23, in some embodiments, a part of an end of the assembling post 23 passing through the assembling hole 76 is connected with the connecting busbar A by hot melting or riveting.

It is noted that, in a row direction of one battery cell array, the one battery cell array may be longer in length, so a plurality of trays 22 may be provided, that is, the tray 22 may be one or plurality in number, and when the tray 22 is provided as plurality, adjacent trays 22 may connected together (for example but is not limited to employ an integral structure).

As shown in FIG. 5 to FIG. 7, in an embodiment of the present disclosure, each column of the battery cell array has Y battery cells 24 and is the same in the number of battery cells 24, each connecting busbar A includes X positive electrode connecting portions 62 and X negative electrode connecting portions 64, and X is larger than Y. In the present embodiment, Y=3, X=5, that is, each column of the battery cell array of the present embodiment includes three battery cells, so that six rows (R1-R6) of the battery cells are constituted in the battery cell array, the plurality of connecting busbars are arranged to repeat a group that six connecting busbars (A-F) having different structure features are continuously arranged so that a plurality of groups is formed to connect the battery cells, each connecting busbar has six components, five positive electrode connecting portions and five negative electrode connecting portions. Each connecting busbar spans the battery cells of four columns and connects ten battery cells 24 of the battery cells (the five positive electrode connecting portions respectively connect the positive electrodes of five battery cells and the five negative electrode connecting portions respectively connect the negative electrodes of additional five battery cells).

As shown in FIG. 5 to FIG. 7, in an embodiment of the present disclosure, the plurality of connecting busbars A are divided to a plurality of groups which repeatedly arrange one of the plurality of groups, each group includes at least two connecting busbars A, the connecting busbars A of the same group are not completely the same in structure feature. Here, the above structure feature includes at least one of a position, an extending length, a width, a relative angle of the main body portion 60, the positive electrode connecting portion 62, the negative electrode connecting portion 64 and the connecting portion 58 of any component (A1-A6) of the connecting busbar A.

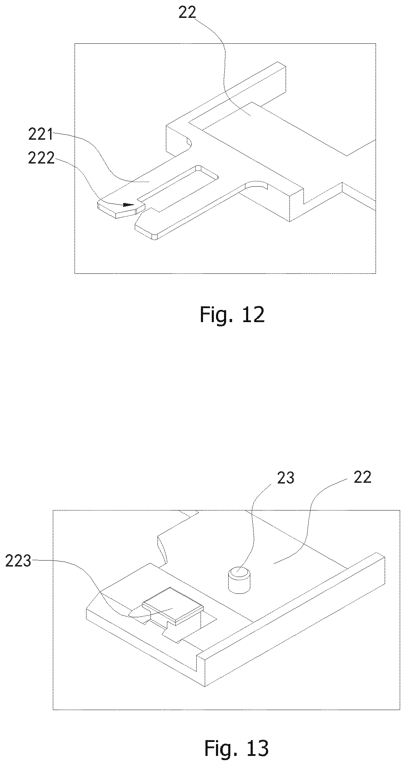

Referring to FIG. 10 to FIG. 15, FIG. 10 representatively illustrates a perspective view of a partial structure of the battery connection module in another exemplary embodiment which conforms to the principle of the present disclosure with a partial structure of the trays 22 and the connecting busbars A of the battery connection module shown, FIG. 11 representatively illustrates an exploded schematic view of FIG. 10, FIG. 12 representatively illustrates a partially enlarged schematic view of FIG. 11 indicated by a dotted-line frame P, FIG. 13 representatively illustrates a partially enlarged schematic view of FIG. 11 indicated by a dotted-line frame Q, FIG. 14 representatively illustrates a plane schematic view of the connecting busbars A of the battery connection module of FIG. 10 and FIG. 11, and FIG. 15 representatively illustrates a perspective view of one connecting busbar A of the battery connection module of FIG. 10 and FIG. 11.

As shown in FIG. 14 and FIG. 15, in an embodiment of the present disclosure, the fusible portion 63 is provided between the main body portion 60 and the positive electrode connecting portion 62.

In an embodiment of the present disclosure, there is at least one connecting strip between the main body portion 60 and the positive electrode connecting portion 62, the connecting strip constitutes the fusible portion 63, the connecting strip is constructed as an arch which protrudes. For example, as shown in FIG. 14 and FIG. 15, there is an aperture 69 between the main body portion 60 and the positive electrode connecting portion 62, the two connecting strips which are positioned at two opposite sides of the aperture 69 respectively constitute the fusible portions 63, each connecting strip constitutes an arch which protrudes upwardly relative to the main body portion 60 and the positive electrode connecting portion 62. By the above design, the shape of the arch of the fusible portion 63 may allow a position of the positive electrode connecting portion 62 to have movable elasticity so that the position of the positive electrode connecting portion 62 may have relative large movement so as to be connected to the positive electrode of the corresponding battery cell (for example assembling position tolerance), and the fusible portion 63 can endure relative movement between the positive electrode connecting portion 62 and the main body portion 60 (for example relative movement resulted from vibration).

As shown in FIG. 10 to FIG. 13, in an embodiment of the present disclosure, the two adjacent trays 22 are connected by a connecting construction, the connecting construction includes a latching piece which is provided to one of the two adjacent trays 22 and a latching block which is provided to the other of the two adjacent trays 22.

As shown in FIG. 10 to FIG. 13, in an embodiment of the present disclosure, the latching piece 221 is constructed as a pair of latching legs, tips of two latching legs have latching hooks 222 which face each other. The latching block is constituted as a T-shaped protruding block 223. By the above design, the pair of latching legs elastically splay when the pair of latching legs pass through the T-shaped protruding block 223, elastically restore after the latching hooks 222 of the pair of latching legs pass through the T-shaped protruding block 223, and latch with the T-shaped protruding block 223.

As shown in FIG. 14 and FIG. 15, in an embodiment of the present disclosure, each component, which has the negative electrode connecting portion 64, of the plurality of components of the connecting busbar A makes the negative electrode connecting portion 64 constituted as an arc-shaped sheet body which spreads toward two sides.

As shown in FIG. 14 and FIG. 15, in an embodiment of the present disclosure, there is a step portion 67 which is between the main body portion 60 and the negative electrode connecting portion 64 and bends downwardly.

It should be noted here that the battery connection module shown in the drawings and described in this specification are just a few examples of many kinds of battery connection modules which can employ the principle of the present disclosure. It should be clearly understood that the principle of the present disclosure is limited to any details or any components of the battery connection module shown in the drawings or described in this specification.

In conclusion, with the above design, the battery connection module proposed by the present disclosure can be adapted to the battery cell array in which the battery cells are irregularly arranged, each battery cell of the battery cell array has the positive electrode and the negative electrode which are in the same end face, the battery cells of every two adjacent columns are staggered in the corresponding rows so that the battery cells forms a regular symmetric arrangement, in such a type of the battery cell array, by the battery connection module promoted by the present disclosure, it can use one connecting busbar to realize connection with more number of the battery cells, can connect the battery cells which are not positioned in regular symmetric positions, at the same time can use a plurality of connecting busbars which each has a different irregular symmetric configuration to connect the battery cells.

The exemplary embodiments of the battery connection module proposed by the present disclosure are described and/or illustrated in detail above. However, the embodiments of the present disclosure are not limited to the specific embodiments described herein. On the contrary, the components and/or steps of each embodiment can be used independently and separately from other components and/or steps described herein. Each component and/or step of one embodiment may also be used in combination with other components and/or steps of other embodiments. When introducing the elements/components/etc. described and/or illustrated here, the terms "one", "a/an" and "the above" are used to indicate the existence of one or more elements/components/etc. The terms "include/includes/including", "comprise/comprises/comprising" and "has/have/having" are used to mean open inclusion and mean that there may be other elements/components/etc. besides the listed elements/components/etc. In addition, the terms "first" and "second" in the claims and the specification are used only as marks and are not as a numerical limitation on their objects.

Although the battery connection module proposed by the present disclosure has been described according to different specific embodiments, a person skilled in the art will recognize that the implementation of the present disclosure can be modified within the scope of the claims.

## Claims

1. A battery connection module (20) which is used to connect a battery cell array (AR1, AR2, AR3), the battery cell array (AR1, AR2, AR3) comprising a plurality of columns (CL1-CLX) and each column (CL1-CLX) comprising battery cells (24) and being the same in the number of battery cells (24),
the corresponding battery cell (24) of one column (CL) of adjacent columns being positioned between the two corresponding battery cells (24) of the other column of the adjacent columns, the plurality of columns repeating arrangement of the adjacent columns in a row direction and constituting a plurality of rows (R1-RX) of the battery cells (24), the corresponding battery cell (24) of one row of adjacent rows being positioned between the two corresponding battery cells (24) of the other row of the adjacent rows, each battery cell (24) having a positive electrode and a negative electrode which are positioned on the same end face, the battery connection module (20) comprising:
a tray (22); and
a plurality of connecting busbars (A) which are assembled on the tray (22);
each connecting busbar (A) having a plurality of components (A1-A6), each of a part of the plurality of components (A1-A6) having a main body portion (60), a positive electrode connecting portion (62) which extends from a first end of the main body portion (60) and a negative electrode connecting portion (64) which extends from a second end of the main body portion (60), each of a part of the plurality of components (A1-A6) having a main body portion (60) and only having a positive electrode connecting portion (62) which extends from a first end of the main body portion (60), each of a part of the plurality of components (A1-A6) having a main body portion (60) and only having a negative electrode connecting portion (64) which extends from a second end of the main body portion (60); the main body portions (60) of the plurality of components (A1-A6) of each connecting busbar (A) being integrally connected by respective connection portions (58);
in each the connecting busbar(A), each of a part of the plurality of components (A1-A6) connecting the positive electrodes and the negative electrodes of the two battery cells (24) of every other column (CL), each of a part of the plurality of components (A1-A6) connecting the positive electrodes and the negative electrodes of the two battery cells (24) of the same row, each of a part of the plurality of components (A1-A6) only connecting the positive electrode of one the battery cell (24), each of a part of the plurality of components (A1-A6) only connecting the negative electrode of one the battery cell (24).

2. The battery connection module according to claim 1, wherein
the main body portion (60) is a plane structure and extends linearly;
a thickness of the positive electrode connecting portion (62) is less than a thickness of the main body portion (60), a lower surface of the positive electrode connecting portion (62) is coplanar with a lower surface of the main body portion (60).

3. The battery connection module according to claim 1 or 2, wherein the negative electrode connecting portion (64) of each component (A1-A6) of the connecting busbar (A) has two branching feet (65).

4. The battery connection module according to any one of the preceding claims, wherein the main body portion (60) of each component of the connecting busbar (A) is provided with a fusible portion (63) which acts as overcurrent protection, a cross sectional area of the fusible portion (63) in a thickness direction is minimum relative to a cross sectional area of other part of the main body portion (60) and/or
the main body portion (60) is provided with a material removed portion (61) and the fusible portion (63) is constructed by the material removed portion (61) and/or
the fusible portion (63) is provided to the main body portion (60) close to the negative electrode connecting portion (64).

5. The battery connection module according to claim 4, wherein the material removed portion (61) is an aperture (69) constructed on the main body portion (60), two edge strips which are at two opposite sides of the aperture (69) together constitute the fusible portion (63) and/or the two edge strips are constructed as V-shapes which protrude toward each other and toward an interior of the aperture (69).

6. The battery connection module according to any one of the preceding claims, wherein the tray (22) is integrally provided with an assembling post (23) and/or the connecting busbar (A) is provided with an assembling hole (76) which corresponds to the assembling post (23).

7. The battery connection module according to any one of the preceding claims, wherein
each column of the battery cell array (AR1, AR2, AR3) has Y battery cells and is the same in the number of battery cells (24); and/or
each connecting busbar (A) comprising X positive electrode connecting portions (62) and X negative electrode connecting portions (64), X is larger than Y.

8. The battery connection module according to any one of the preceding claims, wherein the plurality of connecting busbars (A) are divided to a plurality of groups which repeatedly arrange one of the plurality of groups and/or each group comprising at least two connecting busbars (A), the connecting busbars (A) of the same group are not completely the same in structure feature.

9. The battery connection module according to any one of the preceding claims, wherein each column of the battery cell array (AR1, AR2, AR3) comprises three battery cells (24), so that six rows (R1-R6) of the battery cells (24) are constituted in the battery cell array (AR1, AR2, AR3); and/or each connecting busbar (A) has six components (A1-A6), five positive electrode connecting portions (62) and five negative electrode connecting portions (64).

10. The battery connection module according to any one of the preceding claims, wherein the plurality of connecting busbars (A) are arranged to repeat a group that six connecting busbars (A) having different structure features are continuously arranged so that a plurality of groups is formed to connect the battery cells (24).

11. The battery connection module according to claim 10, wherein each connecting busbar (A) spans the battery cells (24) of four columns.

12. The battery connection module according to any one of the preceding claims 4-11, wherein the fusible portion (63) is provided between the main body portion (60) and the positive electrode connecting portion (62); and/or there is at least one connecting strip between the main body portion (60) and the positive electrode connecting portion (62), the connecting strip constitutes the fusible portion (63), the connecting strip is constructed as an arch which protrudes.

13. The battery connection module according to any one of the preceding claims, wherein the two adjacent trays (22) are connected by a connecting construction, the connecting construction includes a latching piece (221) which is provided to one of the two adjacent trays (22) and a latching block (223) which is provided to the other of the two adjacent trays (22).

14. The battery connection module according to claim 13, wherein the latching piece (221) is constructed as a pair of latching legs, tips of two latching legs have latching hooks (222) which face each other, the latching block (223) is constituted as a T-shaped protruding block.

15. The battery connection module according to any one of the preceding claims, wherein each component (A1-A6), which has the negative electrode connecting portion (64), of the plurality of components of the connecting busbar (A) makes the negative electrode connecting portion (64) constituted as an arc-shaped sheet body which spreads toward two sides; and/or there is a step portion (67) which is between the main body portion (60) and the negative electrode connecting portion (64) and bends downwardly.
